# EUROPEAN PATENT SPECIFICATION

(11) **EP 2 284 025 B1**
(45) Date of publication and mention of the grant of the patent: **20.06.2012**
(21) Application number: 09425325.9
(22) Date of filing: 10.08.2009
(51) Int. Cl.: B60G 9/00, B60G 11/04, B60G 11/38, B60K 17/16

(54) **Rear traction commercial vehicle**
Nutzfahrzeug mit Hinterradantrieb
Véhicule commercial à traction arrière

(43) Date of publication of application: 16.02.2011
(73) Proprietor: Iveco S.p.A., 10156 Torino (IT)
(72) Inventor: Zanini, Emanuele, 10127 Torino (IT); Casella, Giovanni, 25016 Ghiedi (IT); Castellaneta, Matteo, 20093 Cologno Monzese (IT)
(74) Representative: Borsano, Corrado

(56) References cited:
- EP-A2- 1 872 982
- WO-A1-03/106247
- WO-A1-2005/012010
- DE-C- 763 050
- DE-C1- 19 623 936
- GB-A- 2 061 453
- GB-A- 2 347 398
- JP-A- 7 228 163
- US-A- 2 369 501

## Description

### Field of the invention

The present invention belongs to the field of the manufacturing of industrial vehicles, such as for example commercial vehicles and/or trucks. In particular, the invention relates to a rear traction commercial vehicle comprising a differential for the distribution of the traction at the rear wheels. Such a vehicle according to the preamble of claim 1 is known from WO2003/106247A.

### DESCRIPTION OF THE PRIOR ART

Generally, rear traction commercial vehicles have a rigid axle as integration element between the suspension parts, essentially formed by two leaf springs, and the transmission line. To the latter belong the axle shafts, usually placed inside the axle, with the function to transfer the motion to the wheel sides, and the differential, usually placed in the middle part of the rear axle.

The solution described above, even though it is efficient from a functional point of view, presents some drawbacks. A first drawback relates to the positioning of the differential housing in correspondence of the wheel axle. The critical point is represented by the dimensions of the housing itself, which, in order to avoid interferences with the bodywork of the vehicle and in particular with the loading platform, requires a limitation of the travel of the suspension. The height of the loading platform is, in this kind of vehicles, a key factor, having also a high commercial value, connected to the easiness of use of the vehicle.

Thus, it is evident that new technical solutions are needed for the reduction of the distance between the loading platform and the ground, in order to facilitate the loading and unloading operations with respect to the traditional configurations.

A second drawback of the traditional solutions relates to the driving comfort of the vehicle. Differentials and axle shafts, being integral with the rigid axle, are part of the unsprung masses which affect the vehicle's inertia, in particular of the rear axle. In this case, the need emerges for implementing new solutions which allow to limit the extent of unsprung masses.

According to this considerations, the main task of the present invention is to provide a commercial vehicle which allows to overcome the drawbacks mentioned above. A first aim is to realize a loading platform placed at a lower height than the traditional solutions. A further aim is to provide a commercial vehicle which presents a higher driving comfort. Not last, the aim of the present invention is to ensure the same reliability as the traditional solutions, and also an easy manufacturing and industrialization, with competitive costs.

### Summary of the invention

This task and these purposes are achieved by means of a rear traction commercial vehicle comprising a bodywork, a pair of rear wheels and a traction assembly (connected to such wheels). In particular the traction assembly comprises a differential connected to each wheel by means of a mechanical transmission. The vehicle according to the invention comprises a rear suspension assembly comprising an interconnection element for the interconnection between the rear wheels and a pair of spring elements placed between the connection element and the bodywork. Substantially, according to the invention, the interconnection element is independent from the differential, which is suspended to the bodywork of the vehicle. The physical separation of these two components (the interconnection element and the differential) allows to optimize the longitudinal overall dimensions under the bodywork. Such physical separation, along with an appropriate definition of the suspension elements, results in a reduced height of the vehicle's bodywork and, consequently, of the loading platform. At the same time, the suspended position of the differential brings to a reduction of the unsprung masses, namely to an increase of the driving comfort.

A second remarkable aspect of the present invention relates to the choice to functionally place the interconnection element under the axis of rotation of the two rear wheels; this solution contributes to the reduction of the vertical dimensions of the suspension assembly, allowing a further limitation of the height of the loading platform.

Another interesting aspect of the present invention relates to the configuration of the interconnection element preferably having a tubular shape comprising a central part folded backwards in order to have enough space for positioning the differential. Thus the differential itself has an advantageous rear position, in order to optimize the power transmission to the wheels. The rear position of the differential allows to contain the corners of the transmission kinematic chain, with obvious advantages, also in terms of assembling and overall realization costs.

### List of the figures

Further characteristics and advantages will become more evident from the following detailed description of a commercial vehicle according to the present invention, that is shown in a merely illustrative and not limitative form in the attached drawings wherein:
- figure 1 shows a first prospective view relating to the rear part of a commercial vehicle according to the present invention;

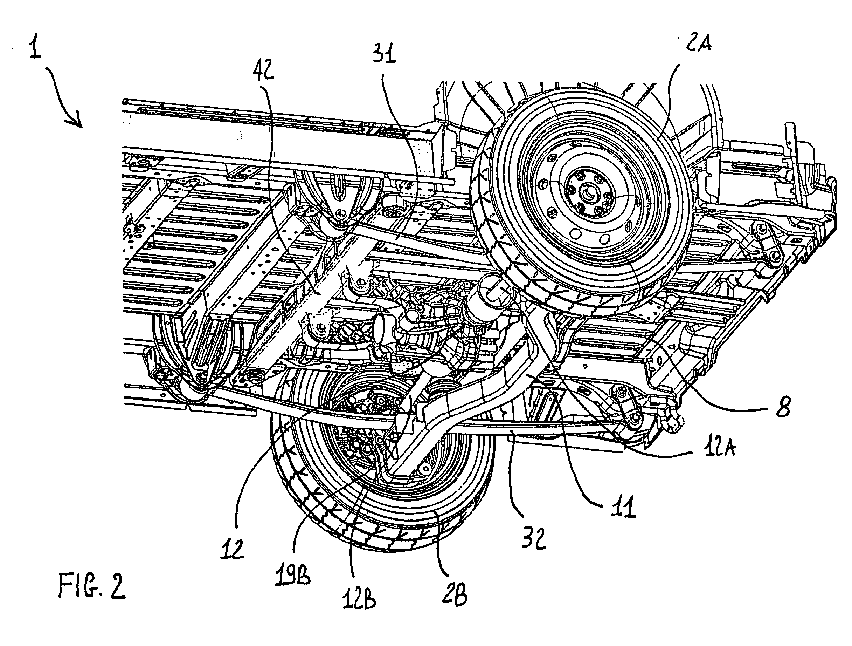

- figure 2 shows a second prospective view of the commercial vehicle of figure 1;
- figure 3 shows a rear view of the vehicle in figure 1;
- figure 4 shows a prospective view of both the rear traction assembly and of the rear suspension assembly of the vehicle in figure 1;
- figure 5 shows a rear view of all the components in figure 4;
- figure 6 shows a view in a plan of the suspension assembly of figure 1;
- figure 7 shows a prospective view of a support frame of the vehicle in figure 1;
- figures 8 and 9 are prospective views of construction details of the suspension assembly of the vehicle of figure 1;
- figures 10 and 11 are further views relating to construction details of the suspension assembly of the vehicle of figure 1.

### Detailed description of the invention

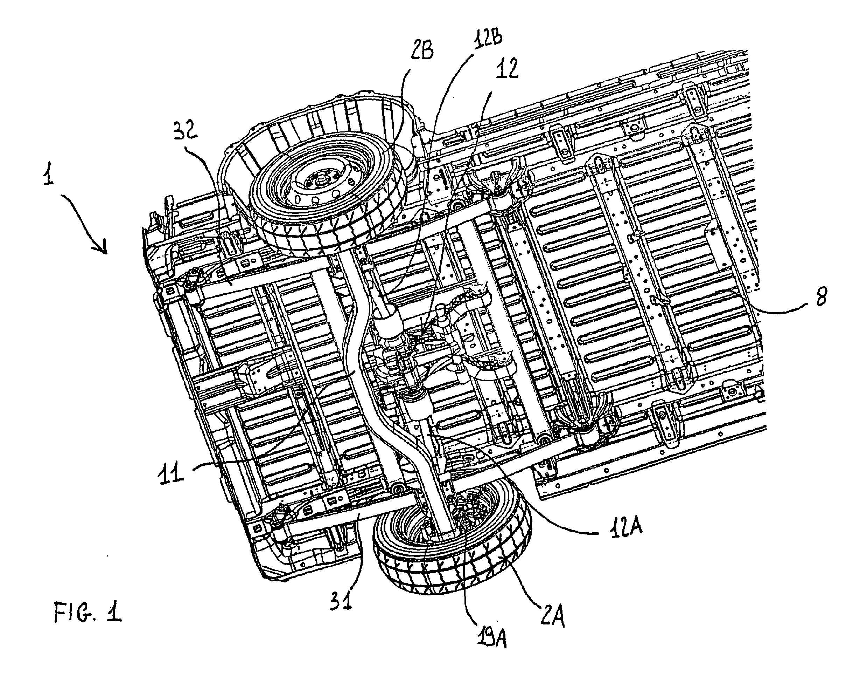

Figure 1 shows a bottom view relating to the rear part of a rear traction commercial vehicle 1 according to the present invention. Such vehicle 1 comprises a rear traction assembly with the function of transmitting the motion from the engine to the rear wheels of the vehicle 2A, 2B. In particular, the traction assembly comprises a propeller shaft (not shown in the figures), a differential 12 from which a mechanical transmission branches off, being formed by two axle shafts 12A, 12B which, by functionally connecting the same differential 12 to the rear wheel hubs, distribute the traction. More in particular, each axle shaft 12A, 12B is connected to the differential 12 by means of a first homokinetic joint (not shown) and is connected to the hub of the relative rear wheel by means of a second homokinetic joint (not shown). The differential 12 is suspended to the bodywork 8 of the vehicle 1 in order to be in a substantially central position with respect to the two rear wheels.

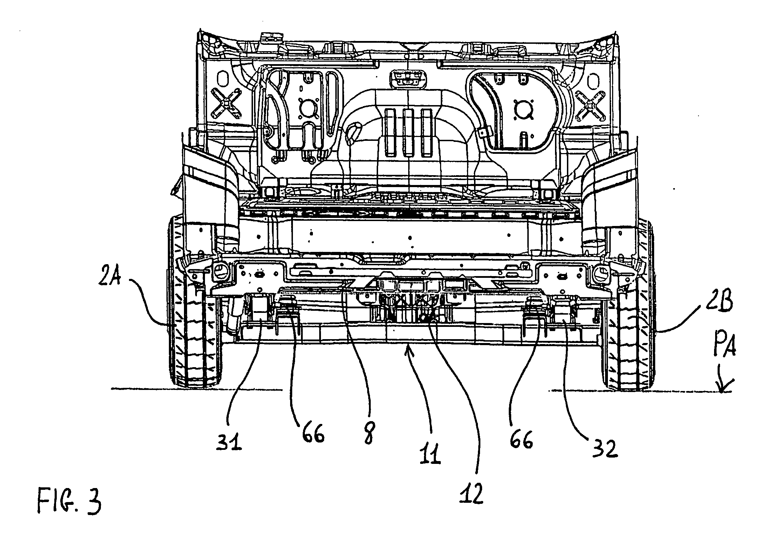

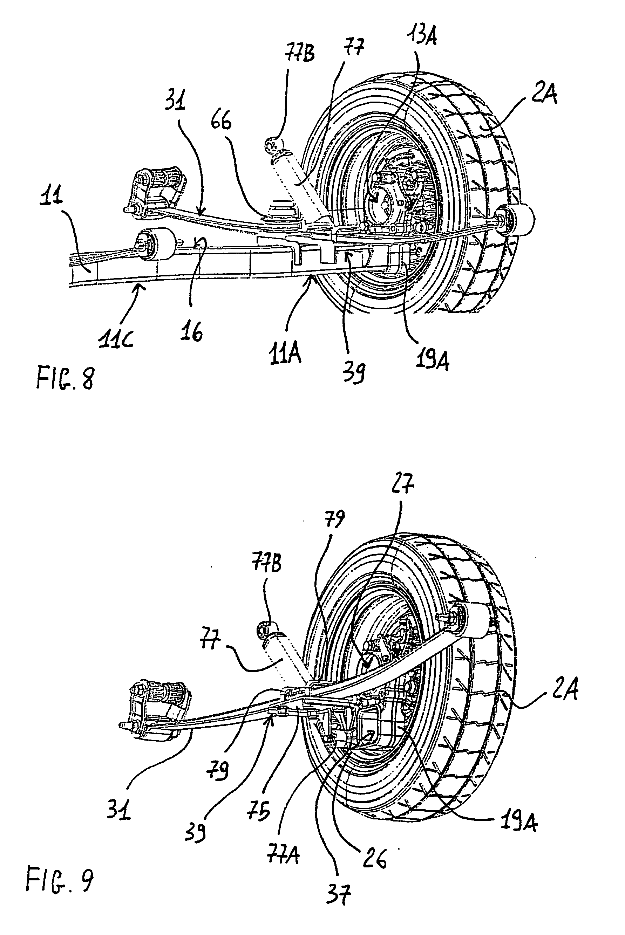

The vehicle 1 according to the invention also comprises a rear suspension assembly independent from the traction assembly. More in detail, the suspension assembly comprises an interconnection element 11 which transversally connects and supports the rear wheels 2A, 2B. Such interconnection element 11 has at its ends two substantially equivalent stanchions 19A,19B, which have the function to support the vehicle loads which, by means of the hubs of the respective wheels 2A, 2B are transmitted to the suspension elements. Figures 8 and 9 show in detail a possible embodiment of the stanchion elements 19A,19B described below in more detail. The suspension assembly also comprises a first spring element 31 and a second spring element 32 constrained to the interconnection element 11 in opposite positions. Each spring element 31,32 comprises a leaf spring whose front 36 and rear 37 ends are connected to the bodywork 8 of the vehicle 1 in correspondence of the lower part of the bodywork itself. With reference, for example, to figure 3, the spring elements of the suspension 31,32 (in the following also referred as leaf springs 31,32) are functionally placed in symmetric position with respect to the central position of the differential 12. More in particular, each of the leaf springs 31,32 is placed close to one of the rear wheels 2A, 2B as better described below.

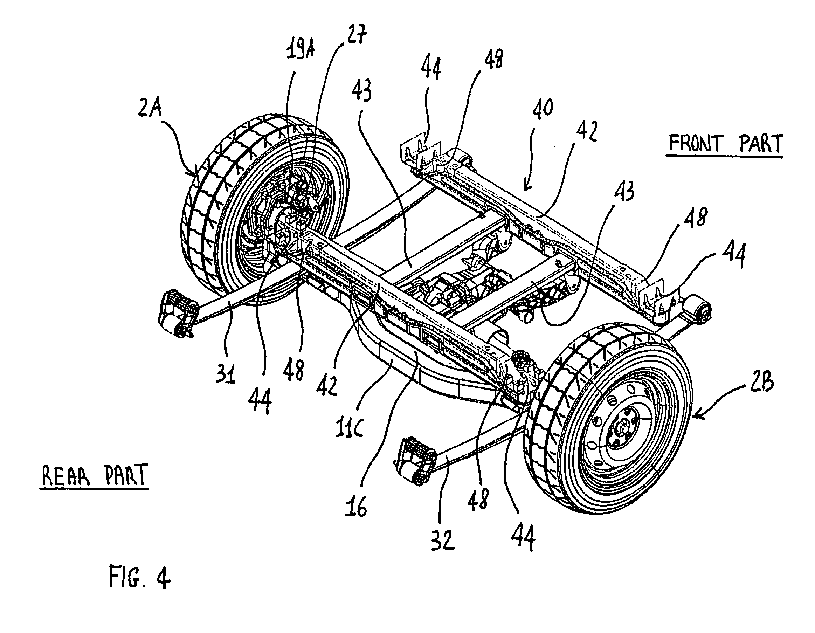

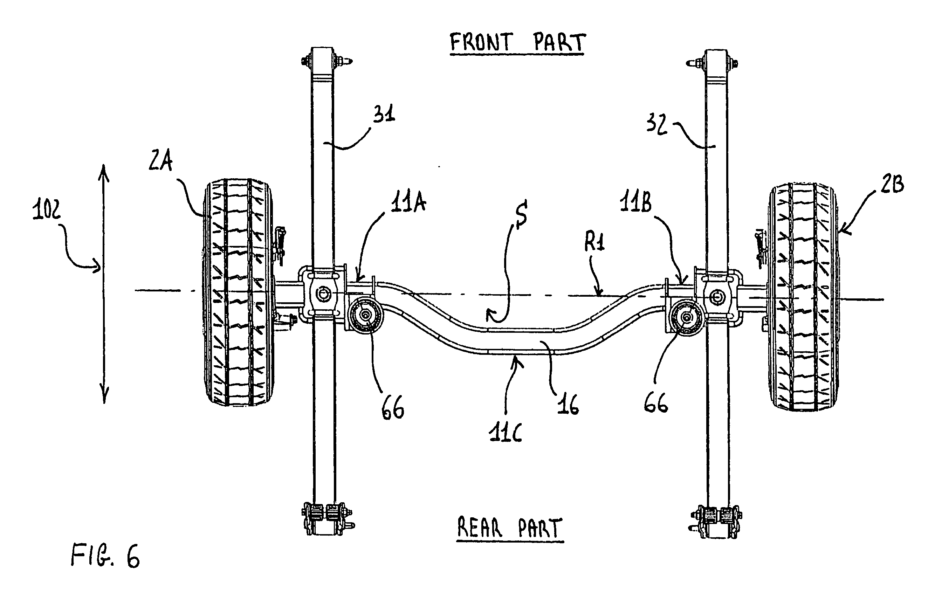

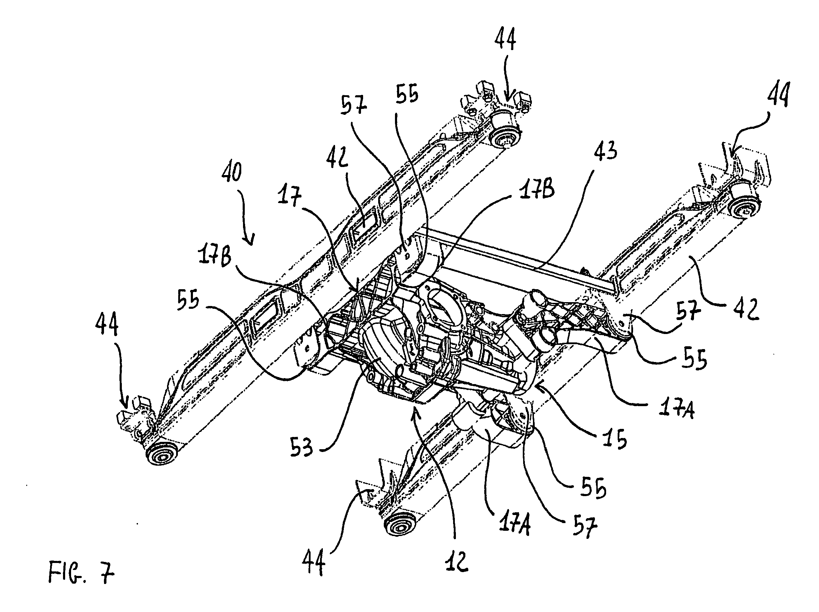

With reference to figure 4 and 7, the differential 12 is connected to the bodywork 8 preferably in a different longitudinal position with respect to the position of the interconnection element 11. These positions are estimated along a longitudinal direction (see figure 6) which develops between the front part (FRONT PART) and the rear part (REAR PART). The expression "different longitudinal position" indicates a position of the differential such that it is not placed vertically over the interconnection element 11. By means of this configuration, the vertical dimensions of the differential 12 and of the interconnection element 11 are remarkably reduced. This results, of course, in a reduced height of the bodywork 8 and therefore of the vehicle loading platform.

As shown, the differential 12 preferably has a front position with respect to the interconnection element 11, namely towards the front part of the vehicle (FRONT PART). Obviously, it has to be considered as included in the scope of the present invention that the differential 12, according to its configuration, may be vertically placed over the interconnection element, remaining separate, however, from the latter.

The differential 12 is preferably connected to the bodywork 8 by means of a support frame 40 (see figure 7) which in the case in point comprises a pair of parallel cross members 42 and a pair of longitudinal support elements 43 which develop in parallel between the two parallel cross members 42. The ends 48 of the parallel cross members are constrained to the lower part of the bodywork 8 by means of mechanical connection elements 44. The described embodiment has to be considered as a possible, but not exclusive embodiment of the support frame 40, which may have a different configuration, according, for example, to the shape of the bodywork or to the dimensions of the vehicle 1. In an alternative embodiment not shown in the figures, the differential 12 may be directly supported by a shaped portion of the bodywork 8. In other words, the bodywork 8 may be configured in order to house the differential 12 in one of its portions.

Also with reference to figure 7, the differential 12 comprises a housing 17 where the gearing which defines the functionality of the differential itself is housed. Such housing 17 is connected to the support frame 40 by means of the rubber connection bushings 55 which allow a higher absorption of the vibrations with obvious advantages. More precisely the housing 17 has a substantially symmetrical structure with a central part 53 from which a pair of front connection arms 17A and a pair of rear connection arms 17B develop. Each arm 17A,17B comprises to one end a rubber bushing 55 pivoting to a connecting portion 57 of the support frame 40.

Figure 6 shows a view in a plan of the suspension assembly of the vehicle shown in the figures from 1 to 5. The interconnection element 11 preferably presents a first 11A and a second end part 11B substantially aligned along a transversal reference direction R1 and a central part 11C which develops between the two end parts 11A, 11B and which is folded. In particular, the central part 11C is folded with respect to the two end parts 11A, 11C in order to define a space S useful for the positioning of the differential 12.

Preferably the middle part 11C is substantially folded towards the rear part of the vehicle 1 (indicated with REAR PART in figure 6).

The use of an interconnection element 11 with this configuration allows the differential 12 to be collocated at an height (with respect to the rest plane of the rear wheels in figure 3) close to that of the interconnection element 11 itself. This solution results in the possibility to obtain a reduced height of the bodywork 8 and therefore of the vehicle 1 loading platform. Moreover, the folding of the central part 11C towards the rear part of the vehicle (REAR PART) allows the differential to take a rear position, in order to obtain reduced working angles for the homokinetic joints with obvious advantages in terms of mechanical transmission.

From a structural point of view, the interconnection element 11 is preferably formed by a tubular element with polygonal section which is folded in its central part 11C as indicated above. Such element present a substantially rectangular cross section, preferably square. This solution is particularly advantageous because it facilitates the connection of the interconnection element to the rear wheels 2A, 2B and defines an upper flat rest side 16 for the positioning of the leaf springs as indicated below; moreover the rectangular section, for the same dimensions, allows a higher structural resistance with respect to the circular section of the traditional applications.

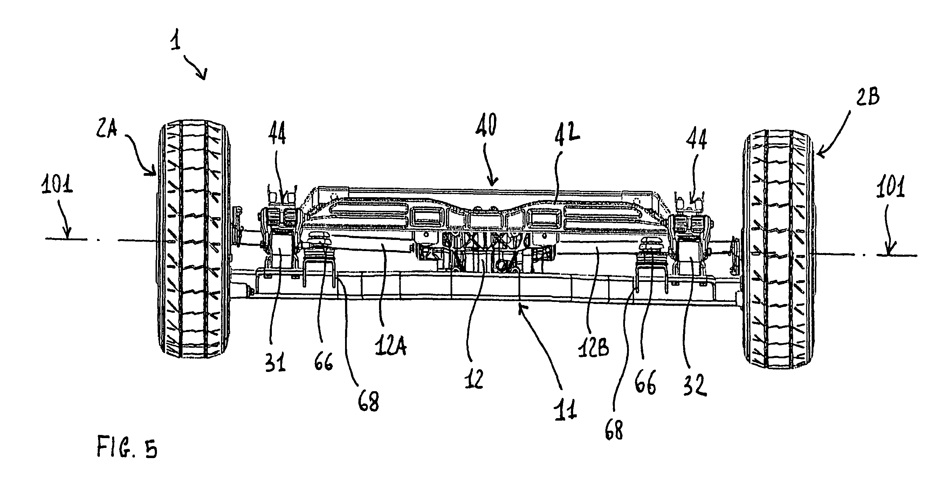

With reference to figures 3 and 5, the suspension assembly preferably comprises also a pair of shock absorbing elements 66 (in the following also indicated with the expression pads 66) symmetrically placed with respect to the position of the differential. The shock absorbing elements 66 have the function to prevent impacts between the bodywork and the interconnection element 11, by absorbing their relative loads. In the solution shown, the pads 66 are connected to the interconnection element 11 by means of bolted brackets 68.

The suspension assembly preferably comprises also a pair of shock absorbers 77, one end 77A of each shock absorber being connected to one of the load bearing elements 19A, 19B which support the ends of the interconnection element 11 (see figures 8 and 9). While a second end 77B of the shock absorbers 77 is functionally connected to the lower part of the bodywork 8.

Figures 8 and 9 show in detail a possible embodiment of the load bearing element 19A which functionally connects the interconnection element to the first wheel 2A. The considerations that follow have to be considered as valid also for the second bearing element 19B. The first bearing element 19A comprises a first seat 26 geometrically coupled with the end of the interconnection element 11 in order to allow its insertion. The load bearing element 19A also comprises a second seat 27 in a position over the first seat 26. In such housing the hub of the first rear wheel 2A is inserted. The homokinetic joint connecting the first axle shaft 12A to the first wheel 2A is also functionally placed close to such second seat 27. As clearly shown in figure 8, by means of the two stanchion elements 19A,19B, the interconnection element 11 is advantageously positioned under the axis of rotation 101 (indicated in figure 5) of the rear wheels 2A, 2B. This solution allows to further lower the position of the loading platform, ensuring at the same time an adequate structural resistance. Moreover it is possible to observe that the use of load bearing elements 19A,19B advantageously facilitates the assembling operations of the vehicle, since such elements may be previously and easily connected to the hubs of the rear wheels 2A, 2B and to the interconnection element 11 by means of the relative seats 26. The connection between the interconnection element 11 and the load bearing elements 19A, 19B by means of a substantially rectangular section ensures a better transmission of the torque, which is no longer left only to welding.

Also with reference to figure 9, each shock absorber 77 of the suspension assembly is connected to a respective load bearing element 19A,19B in correspondence of an extension 37 of the latter which laterally comes out with respect to the first seat 26. In particular the first end 77A of the shock absorbers is connected to such extension 37 of the load bearing element 19A in order to keep a degree of rotation around an axis substantially parallel to the axis 101 of the rear wheels.

Figures 8 and 9 show in detail also a possible embodiment of the connecting element 39 which connects the first leaf spring 31 to the interconnection element 11. In particular such connecting element 39 comprises a supporting base 75 substantially flat welded to the upper side 16 of the first end 11A of the interconnection element 11. The spring 31 is constrained to the supporting base 75 by means of a pair of brackets 79 which close the springs themselves against the supporting base 75. It can be observed that the presence of the upper flat side 16 of the element 11 facilitates the welding of the element 39 and allows the same element to become a simple and reliable structure with obvious advantages in terms of assembling.

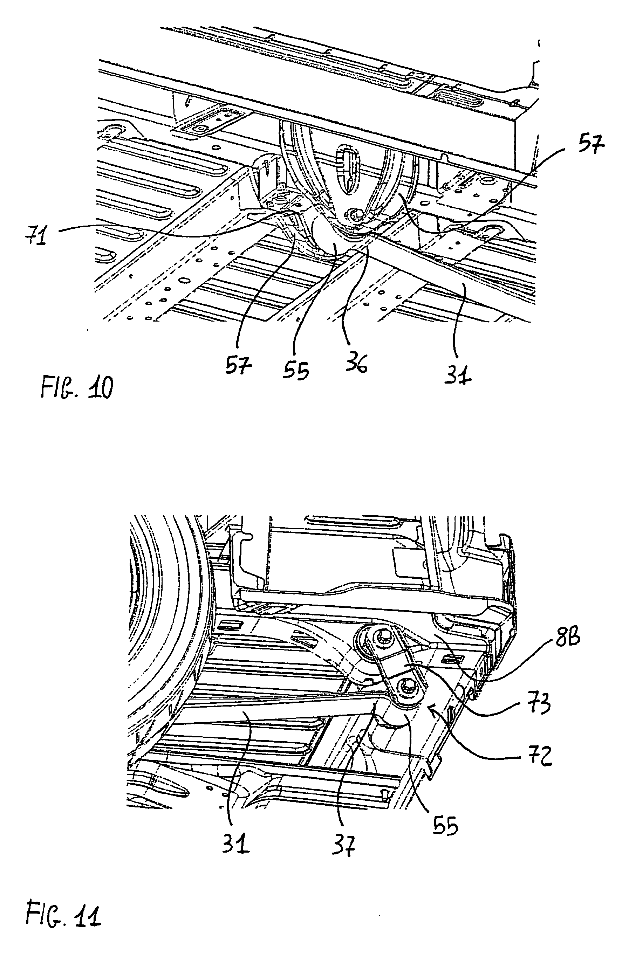

Figures 10 and 11 show in detail a possible embodiment of the front 71 and rear connection means 72 which respectively connect the front 36 and rear end 37 of the first leaf spring 31 to the bodywork 8. With reference to figure 10, the front connection means 71 comprise a pair of plates 57 integral with the bodywork 8 between which a rubber bushing 55 pivots, being placed on the front end 36 of the first leaf spring 31. The rear connection means 72 comprise instead a pair of connecting rods 73 being opposite and pivoting from one side to a portion 8B of the bodywork 8, and from the other side to the rear end 37 of the first leaf spring 31, also by means of the interposition of a rubber bushing 55. Also in this case the use of rubber bushings 55, for connecting the leaf spring 31, allows a higher absorption of the vibrations.

The technical solutions adopted for the door allow to completely fulfil the task and the aim set. In particular the vehicle according to the invention has a bodywork and a loading platform at an height lower than those of the traditional solutions. The position of the differential suspended to the bodywork allows an advantageous reduction of the unsprung masses, which results in a high comfort. The use of a shaped interconnection element facilitates the positioning of the differential and at the same time facilitates the assembling of the vehicle by virtue of the use of the load bearing elements that are easily connected to the rear wheels.

The vehicle according to the invention, can be subjected to numerous variations or modification, without departing from the scope of the invention; moreover all the details may be replaced by others technically equivalent.

Practically, the material used and also the dimensions and the shapes may be any, according to the needs and to the state of the art.

## Claims

1. Rear traction commercial vehicle (1), comprising:
- a bodywork (8);
- a pair of rear wheels (2A, 2B);
- a rear traction assembly (12, 12A, 12B) functionally connected to said rear wheels (2A, 2B) in order to make them driving wheels, said rear traction assembly (12,12A,12B) comprising a differential (12) connected to each of said wheels (2A, 2B) by means of a mechanical transmission; further
- comprising a rear suspension assembly comprising an interconnection element (11) between said driving wheels (2A, 2B) and a pair of leaf springs (31,32) placed between said interconnection element (11) and said bodywork (8) **characterized in that** , said differential (12) is suspended to said bodywork (8) by means of a support frame (40) and is separate from said interconnection element (11,).

2. Vehicle (1) according to claim 1, wherein said differential (12) is suspended to said bodywork (8) in a longitudinal position substantially different from the one of the interconnection element (11).

3. Vehicle (1) according to claim 2, wherein said differential is suspended to said bodywork (8) in a front longitudinal position with respect to the position of said interconnection element (11).

4. Vehicle (1) according to any of the claims from 1 to 3, wherein said interconnection element (11) is placed in a functional position under the axis of rotation (101) of said driving wheels (2A, 2B).

5. Vehicle (1) according to any of the claims from 1 to 4, wherein said interconnection element (11) has a polygonal cross section;

6. Vehicle (1) according to claim 5, wherein said interconnection element has a rectangular cross section;

7. Vehicle (1) according to any of the claims from 1 to 6, wherein said interconnection element (1) is connected to a first (2A) of said rear wheels by means of a first stanchion element (19A) and to a second (2B) of said rear wheels by means of a second stanchion element (19B).

8. Vehicle (1) according to any of the claims from 1 to 7, wherein said interconnection element (11) presents a first end part (11A) and a second end part (11B) substantially aligned with said first end part (11A) according to a substantially rectilinear reference direction (R1), said interconnection element (11) comprising also a central part (11C) which develops between said end parts (11A, 11B), said central part (11C) being folded with respect to said reference direction (R1).

9. Vehicle (1) according to claim 1, wherein said differential unit is connected to said support frame (40) by means of rubber connection elements (55).

10. Vehicle (1) according to any of the claims from 1 to 9, wherein each of said leaf springs (31, 32) comprises a first end (36) connected to said bodywork (8) by means of front connection means (71) and a second end (37) connected to said bodywork (8) by means of rear connection means (72).

11. Vehicle (1) according to claim 10, wherein said leaf springs (31,32) are connected to said interconnection element (11) by means of a connection element (39) comprising a supporting plate (75) welded to one upper side (16) of said interconnection element (11), said connection element (71) comprising a pair of brackets (79) which presses each spring against the supporting plate (75).

12. Vehicle (1) according to any of the claims from 1 to 11, wherein said suspension assembly comprises shock absorbing elements (66) functionally connected to said interconnection element (11).

13. Vehicle (1) according to one or more of the claims from 7 to 12, wherein said load bearing element (19A, 19B) of said axle (19A) comprises a first seat (26) wherein a relative end of the interconnection element (11) is firmly inserted and a second seat (27) wherein the hub of the relative rear wheel (2A, 2B) is inserted, said second housing being in a upper position with respect to said first seat (26).

14. Vehicle (1) according to any of the claims from 1 to 13, wherein said suspension assembly comprises a pair of shock absorbers (77) each of them is constrained to said bodywork (8) and to one of said load bearing elements (19A,19B).

## Patentansprüche

1. Nutzfahrzeug (1) mit Hinterradantrieb, umfassend:
- eine Karosserie (8);
- ein Paar von Hinterrädern (2A, 2B);
- eine Hinterradantriebsbaugruppe (12, 12A, 12B), die mit den Hinterrädern (2A, 2B) funktional verbunden ist, um diese zu Antriebsrädern zu machen, wobei die Hinterradantriebsbaugruppe (12, 12A, 12B) ein Differential (12) umfasst, das mit jedem der Räder (2A, 2B) mittels eines mechanischen Getriebes verbunden ist;
- ferner einer Hinterradaufhängungsbaugruppe umfassend, die ein Verbindungselement (11) zwischen den Antriebsrädern (2A, 2B) und ein Paar von Blattfedern (31, 32) umfasst, die zwischen dem Verbindungselement (11) und der Karosserie (8) angeordnet sind,
**dadurch gekennzeichnet, dass**
das Differential (12) an der Karosserie (8) mittels eines Trägerrahmens (40) aufgehängt ist und von dem Verbindungselement (11) separiert ist.

2. Fahrzeug (1) nach Anspruch 1,
wobei das Differential (12) an der Karosserie (8) in einer Längsposition aufgehängt ist, die von derjenigen des Verbindungselements (11) im Wesentlichen verschieden ist.

3. Fahrzeug (1) nach Anspruch 2,
wobei das Differential an der Karosserie (8) in einer vorderen Längsposition bezogen auf die Position des Verbindungselements (11) aufgehängt ist.

4. Fahrzeug (1) nach einem der Ansprüche 1 bis 3,
wobei das Verbindungselement (11) in einer funktionalen Position unter der Drehachse (101) der Antriebsräder (2A, 2B) angeordnet ist.

5. Fahrzeug (1) nach einem der Ansprüche 1 bis 4,
wobei das Verbindungselement (11) einen Polygonquerschnitt aufweist.

6. Fahrzeug (1) nach Anspruch 5,
wobei das Verbindungselement einen rechteckigen Querschnitt aufweist.

7. Fahrzeug (1) nach einem der Ansprüche 1 bis 6,
wobei das Verbindungselement (1) mit einem ersten (2A) der Hinterräder mittels eines ersten Stützelements (19A) und mit einem zweiten (2B) der Hinterräder mittels eines zweiten Stützelements (19B) verbunden ist.

8. Fahrzeug (1) nach einem der Ansprüche 1 bis 7,
wobei das Verbindungselement (11) einen ersten Endabschnitt (11A) und einen zweiten Endabschnitt (11B) aufweist, der mit dem ersten Endabschnitt (11A) gemäß einer im Wesentlichen geradlinigen Bezugsrichtung (R1) im Wesentlichen ausgerichtet ist, wobei das Verbindungselement (11) auch einen Zentralabschnitt (11C) umfasst, der sich zwischen den Endabschnitten (11A, 11B) erstreckt, wobei der Zentralabschnitt (11C) bezogen auf die Bezugsrichtung (R1) umgebogen ist.

9. Fahrzeug (1) nach Anspruch 1,
wobei die Differentialeinheit mit dem Trägerrahmen (40) mittels eines Gummiverbindungselements (55) verbunden ist.

10. Fahrzeug (1) nach einem der Ansprüche 1 bis 9,
wobei jede der Blattfedern (31, 32) ein erstes Ende (36), das mittels eines vorderen Ankopplungsmittels (71) mit der Karosserie (8) verbunden ist, und ein zweites Ende (37) umfasst, das mittels eines hinteren Ankopplungsmittels (72) mit der Karosserie (8) verbunden ist.

11. Fahrzeug (1) nach Anspruch 10,
wobei die Blattfedern (31, 32) mit dem Verbindungselement (11) mittels eines Ankopplungselements (39) verbunden sind, das eine Trägerplatte (75) umfasst, die an einer Oberseite (16) des Verbindungselements (11) angeschweißt ist, wobei das Ankopplungselement (71) ein Paar von Klammern (79) umfasst, das jede Feder gegen die Trägerplatte (75) drückt.

12. Fahrzeug (1) nach einem der Ansprüche 1 bis 11,
wobei die Aufhängungsbaugruppe Stoßdämpferelemente (66) umfasst, die mit dem Verbindungselement (11) funktional verbunden sind.

13. Fahrzeug (1) nach einem oder mehreren der Ansprüche 7 bis 12, wobei das Last tragende Element (19A, 19B) der Achse (19A) einen ersten Sitz (26), in den ein relatives Ende des Verbindungselements (11) fest eingefügt ist, und einen zweiten Sitz (27) umfasst, in den die Nabe der relativen Hinterachse (2A, 2B) eingefügt ist, wobei sich das zweite Gehäuse in einer oberen Position bezogen auf den ersten Sitz (26) befindet.

14. Fahrzeug (1) nach einem der Ansprüche 1 bis 3,
wobei die Aufhängungsbaugruppe ein Paar von Stoßdämpfern (77) umfasst, von denen jeder an der Karosserie (8) und an einem der Last tragenden Elemente (19A, 19B) befestigt ist.

## Revendications

1. Véhicule commercial à propulsion (1), comprenant :
une carrosserie (8) ;
une paire de roues arrière (2A, 2B) ;
un ensemble propulsion (12, 12A, 12B) relié fonctionnellement auxdites roues arrière (2A, 2B) afin d'en faire des roues motrices, ledit ensemble propulsion (12, 12A, 12B) comprenant un différentiel (12) relié à chacune desdites roues (2A, 2B) au moyen d'une transmission mécanique ;
comprenant en outre un ensemble suspension arrière comprenant un élément de liaison mutuelle (11) entre lesdites roues motrices (2A, 2B) et une paire de ressorts à lames (31, 32) placés entre ledit élément de liaison mutuelle (11) et ladite carrosserie (8), **caractérisé en ce que** ledit différentiel (12) est suspendu à ladite carrosserie (8) au moyen d'un cadre de support (40) et est séparé dudit élément de liaison mutuelle (11,).

2. Véhicule (1) selon la revendication 1, dans lequel ledit différentiel (12) est suspendu à ladite carrosserie (8) dans une position longitudinale sensiblement différente de celle de l'élément de liaison mutuelle (11).

3. Véhicule (1) selon la revendication 2, dans lequel ledit différentiel est suspendu à ladite carrosserie (8) dans une position longitudinale avant par rapport à la position dudit élément de liaison mutuelle (11).

4. Véhicule (1) selon une quelconque des revendications 1 à 3, dans lequel ledit élément de liaison mutuelle (11) est placé dans une position fonctionnelle sous l'axe de rotation (101) desdites roues motrices (2A, 2B).

5. Véhicule (1) selon une quelconque des revendications 1 à 4, dans lequel ledit élément de liaison mutuelle (11) possède une section transversale polygonale.

6. Véhicule (1) selon la revendication 5, dans lequel ledit élément de liaison mutuelle possède une section transversale rectangulaire.

7. Véhicule (1) selon une quelconque des revendications 1 à 6, dans lequel ledit élément de liaison mutuelle (1) est relié à une première (2A) desdites roues arrière au moyen d'un premier élément porteur de charge (19A) et à une seconde (2B) desdites roues arrière au moyen d'un second élément porteur de charge (19B).

8. Véhicule (1) selon une quelconque des revendications 1 à 7, dans lequel ledit élément de liaison mutuelle (11) présente une première partie d'extrémité (11A) et une seconde partie d'extrémité (11B) sensiblement alignée avec ladite première partie d'extrémité (11A) selon une direction de référence sensiblement rectiligne (R1), ledit élément de liaison mutuelle (11) comprenant également une partie centrale (11C) qui se développe entre lesdites parties d'extrémité (11A, 11B), ladite partie centrale (11C) étant pliée par rapport à ladite direction de référence (R1).

9. Véhicule (1) selon la revendication 1, dans lequel ladite unité différentielle est reliée audit cadre de support (40) au moyen d'élément de liaison en caoutchouc (55).

10. Véhicule (1) selon une quelconque des revendications 1 à 9, dans lequel chacun desdits ressorts à lames (31, 32) comprend une première extrémité (36) reliée à ladite carrosserie (8) grâce à des moyens de liaison avant (71) et une seconde extrémité (37) reliée à ladite carrosserie (8) grâce à des moyens de liaison arrière (72).

11. Véhicule (1) selon la revendication 10, dans lequel lesdits ressorts à lames (31, 32) sont reliés audit élément de liaison mutuelle (11) au moyen d'un élément de liaison (39) comprenant une plaque de support (75) soudée à un côté supérieur (16) dudit élément de liaison mutuelle (11), ledit élément de liaison (71) comprenant une paire d'appuis (79) qui comprime chaque ressort contre la plaque de support (75).

12. Véhicule (1) selon une quelconque des revendications 1 à 11, dans lequel ledit élément suspension comprend des éléments d'absorption de chocs (66) reliés fonctionnellement audit élément de liaison mutuelle (11).

13. Véhicule (1) selon une ou plusieurs des revendications 7 à 12, dans lequel ledit élément porteur de charge (19A, 19B) dudit essieu (19A) comprend un premier emplacement (26) dans lequel une extrémité relative de l'élément de liaison mutuelle (11) est fermement insérée et un second emplacement (27) dans lequel le moyeu de la roue arrière relative (2A, 2B) est inséré, ledit second emplacement étant dans une position supérieure par rapport audit premier emplacement (26).

14. Véhicule (1) selon une quelconque des revendications 1 à 13, dans lequel ledit ensemble suspension comprend une paire d'amortisseurs de chocs (77), chacun d'eux est fixé à ladite carrosserie (8) et à un desdits éléments porteurs de charge (19A, 19B).
